# EUROPÄISCHE PATENTSCHRIFT

(11) **EP 2 479 872 B1**
(45) Veröffentlichungstag und Bekanntmachung des Hinweises auf die Patenterteilung: **30.08.2017**
(21) Anmeldenummer: 11152099.5
(22) Anmeldetag: 25.01.2011
(51) Int. Cl.: H02K 1/27, H02K 23/04

(54) **PERMANENTERREGTE SYNCHRONMASCHINE MIT EINEM ROTOR**
PERMANENTLY EXCITED SYNCHRONOUS MACHINE WITH A ROTOR
MACHINE SYNCHRONE EXCITÉE EN PERMANENCE DOTÉE D'UN ROTOR

(43) Veröffentlichungstag der Anmeldung: 25.07.2012
(73) Patentinhaber: Siemens Aktiengesellschaft, 80333 München (DE)
(72) Erfinder: Storath, Albrecht, 97618 Niederlauer (DE)

(56) Entgegenhaltungen:
- EP-A1- 1 816 725
- EP-A2- 1 895 636
- WO-A1-2010/009742
- US-A- 4 110 718

## Beschreibung

Die Erfindung betrifft eine permanenterregte Synchronmaschine mit einem Stator, der ein Wicklungssystem aufweist, das in Nuten eines Blechpakets eines Stators angeordnet ist, wobei die Nuten zu einem zwischen dem Stator und einem Rotor bestehenden Luftspalt weisen, wobei der Rotor Permanentmagnete aufweist, die eine gerade Anzahl von Polen bildet.

Auf Rotoren von permanenterregten Synchronmaschinen werden die Pole üblicherweise durch Magnetblättchenanordnungen mit gleichbleibender Blättchendicke ausgeführt, wobei durch geeignete Wahl der Polbedeckung, d.h. anteilige Belegung eines Pols mit Magneten in der Größe von ca. 80 bis 86% der Anteil der fünften und siebten Oberwelle minimiert wird. Der Oberwellenanteil einer solchen Anordnung ist aber trotz allen Maßnahmen mit ca. 30% vergleichsweise hoch. Das Luftspaltfeld über einem derartigen Polpaar, verläuft im Wesentlichen rechteckförmig von einem vorgegebenen Wert der magnetischen Induktion nahezu schlagartig auf den Wert Null in der Pollücke.

Des Weiteren sind Anordnungen bekannt, bei denen die Dicke der Magnetblättchen zu den Polrändern hin abgesenkt wird, so dass dort ein größerer geometrischer Luftspalt entsteht, der zu einer Absenkung der Luftspaltinduktion im Bereich dieser Polränder führt. Bei Magnetschalen, also einem Permanentmagneten pro Pol wird dieser Effekt mit geringeren Schalendicken im Randbereich erzeugt.

Nachteilig ist dabei die geringe magnetische Stabilität eines Pols in seinem Randbereich.

Aus der EP 1 816 725 A1 ist eine elektrische Maschine mit modularen Permanentmagnetpolen bekannt, wobei die Pole jeweils aus drei oder mehr Permanentmagnetmodulen mit spezifischen Dimensionen und Magnetisierung bestehen.

Aus der EP 1 895 636 A2 ist eine rotierende Maschine umfassend einen Rotor mit einem Rotorkern und einer Vielzahl von Permanentmagnetsegmenten bekannt, welche sich jeweils im Querschnitt von der Mitte zu den gegenüberliegenden Enden verjüngen und dort eine höhere Koerzitivkraft aufweisen als in der Mitte.
Ausgehend davon liegt der Erfindung die Aufgabe zugrunde, einen Rotor für eine permanenterregte Synchronmaschine zu schaffen, bei der die Oberwellenanteile weiter abgesenkt werden. Damit soll unter anderem der Wirkungsgrad der permanenterregten Synchronmaschine weiter erhöht werden. Des Weiteren soll das Luftspaltfeld auch nach längerem Betreib der permanenterregten Synchronmaschine einen sinusförmigen Verlauf angenähert werden, d.h. es soll eine Langzeitstabilität der magnetischen Pole des Rotors geschaffen werden.

Die Lösung der gestellten Aufgabe gelingt durch eine permanenterregte Synchronmaschine mit den Merkmalen des Anspruchs 1. Als Koerzitivfeldstärke wird dabei die magnetische Feldstärke verstanden, die notwenig ist, um eine ferromagnetische Substanz vollständig zu entmagnetisieren, so dass der resultierende Gesamtfluss gleich Null ist.

Unter Remanenz wird die Flussdichte verstanden, die ohne ein äußeres Feld auftritt.

Durch die erfindungsgemäßen Merkmale wird das Luftspaltfeld einem sinusförmigen Verlauf angenähert, so dass sich der Oberwellenanteil, wie eine Fourier-Analyse zeigt, von bisher 30% auf nunmehr 10% verringert. Damit stellt sich ein verbesserter Wirkungsgrad als auch geringere Verluste der permanenterregten Synchronmaschine ein, was letztendlich die Aufwendungen für eine ausreichende Kühlung reduziert. Des Weiteren stellen sich aufgrund der kleineren Drehmomentenwelligkeit und der damit verbundenen geringeren Schwingungsanregung vergleichsweise geringere Pendelmomente der dynamoelektrischen Maschine ein. Durch den erfindungsgemäßen Aufbau stellt sich je nach Achshöhe des Rotors eine Materialeinsparung von ca. 5 bis 20% ein.

Vorteilhafterweise ist dabei jeder Permanentmagnet vorzugsweise quaderförmig ausgeführt und weist in Umfangsrichtung betrachtet eine gleichbleibende Dicke auf. Permanentmagnete mit einer vergleichsweise hohen Remanenzinduktion und niedrigen Koerzitivfeldstärke sind in der Mitte des Pols angeordnet. Permanentmagnete mit einer vergleichsweise geringen Remanenzinduktion hohen Koerzitivfeldstärke sind an den Enden des jeweiligen Pols angeordnet.

Dabei wird beispielsweise ein Pol, der in Umfangsrichtung durch sieben Permanentmagneten gebildet ist, so aufgebaut, dass die Koerzitivfeldstärke ausgehend von der Mitte des Pols in Richtung der Enden des Pols zunimmt und die Remanenzinduktion ausgehend von der Mitte des Pols zu den beiden Enden des Pols abnimmt. Zusätzlich nimmt auch die radiale Höhe der Permanentmagneten dieses Pols in Richtung der Enden des Pols ab.

Dadurch stellt sich in Umfangsrichtung betrachtet für jeden Pol ein stufenförmiger Verlauf von radialer Höhe, Koerzitivfeldstärke und Remanenzinduktion ein. Die Stufigkeit ist dabei umso geringer je mehr Permanentmagnete, in Umfangsrichtung betrachtet, bei der Gestaltung eines Pols vorgesehen sind. Dadurch stellt sich letztendlich das angestrebte sinusförmige Luftspaltfeld ein.

Damit nimmt ausgehend von der Polmitte die Remanenz der Permanentmagnete ab und in gleichem Maße nimmt ausgehend von der Polmitte zu den Polenden hin die Koerzitivfeldstärke der Permanentmagnete zu.

Der Einsatz von Materialien mit hoher Koerzitivfeldstärke bei hohen Betriebstemperaturen ist aufgrund der höheren Entmagnetisierungsfeldstärke im Randbereich des Pols besonders vorteilhaft. Begünstigt wird der Einsatz derartiger Materialien, da hochremanente Ausführungen relativ niedrig Koerzitivfeldstärken bei hohen Betriebstemperaturen und niedrigremanente Materialien hohe Koerzitivfeldstärke bei hohen Betriebstemperaturen aufweisen.

Die mit einer Verringerung der radialen Höhe der Permanentmagneten normalerweise verbundene Verringerung der magnetischen Langzeitstabilität wird durch den Einsatz eines hochkoerzitiven Materials kompensiert. Damit wird ein Rückgang der magnetischen Stabilität bei höheren Temperaturen, insbesondere an den Enden des Pols verhindert.

Vorteilhafterweise kann durch einen weiteren Parameter, nämlich der Verringerung der Breite der Permanentmagnete zusätzlich zu der Verringerung der radialen Höhe der Permanentmagnete an den Polenden, verbunden mit den oben genannten Materialeigenschaften eine weitere Verringerung der Verluste erreicht werden.

Die Energiedichte, also die auf das Volumen der Permanentmagneten bezogenen magnetische Energie nimmt in Umfangsrichtung betrachtet in Richtung der Polenden ab. Die magnetische Energie ist die gesamte im Permanentmagneten gespeicherte Feldenergie.

Ein derartiger permanenterregter Synchronmotor ist besonders vorteilhaft in autarken Antriebssystemen, beispielsweise Elektroautos anzuwenden, da aufgrund des hohen Wirkungsgrades dieses permanenterregten Synchronmotors die nur begrenzt verfügbare Energie optimal umgesetzt werden kann.

Die Erfindung sowie weitere vorteilhafte Ausgestaltungen der Erfindung werden anhand der folgenden Ausführungsbeispiele prinzipiell erläutert. Darin zeigen:
- FIG 1: Längschnitt einer prinzipiellen Synchronmotors,
- FIG 2: einen Ausschnitt eines Blechpakets mit Magneten,
- FIG 3: ein Luftspaltfeld über einem Polpaar in ebener Darstellung,
- FIG 4: eine Darstellung eines Magnetpols mit Pollücke und Magnetblättchen unterschiedlicher Dicke und Breite und unterschiedlichen magnetischen Eigenschaften,
- FIG 5,6: eine Darstellung eines Magnetpols und ein dazu korrespondierendes Luftspaltfeld.

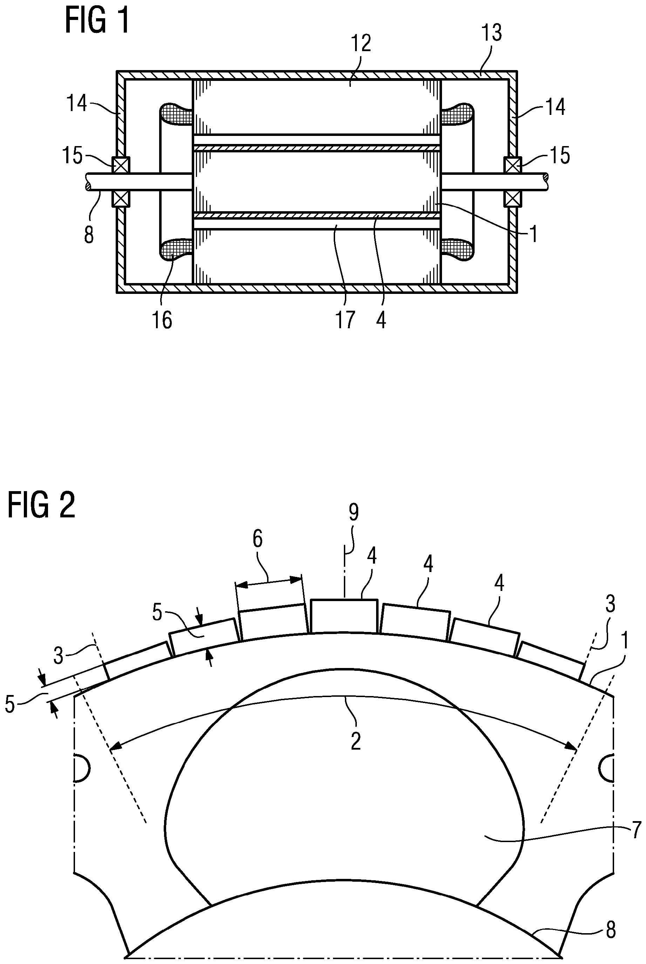

FIG 1 zeigt in einem Längsschnitt eine prinzipiell dargestellte permanenterregte Synchronmaschine, mit einem Stator 12, der ein nicht näher dargestelltes Wicklungssystem aus gesehnten Spulen oder Zahnspulen aufweist, das an den Stirnseiten des Stators 12 Wickelköpfe 16 ausbildet. Der Stator 12 ist in ein Gehäuse 13 eingesetzt. Eine Welle 8 ist über Lager 15 und deren Lagerschilden 14 am Gehäuse 13 abgestützt. Die Welle 8 ist mit einem Rotor 1 drehfest verbunden, der an seiner Oberfläche Permanentmagnete 4 aufweist. Dabei sind die Permanentmagnete 4 an der Oberfläche des Rotors 1, in Ausnehmungen an der Oberfläche des Rotors 1 oder in axial verlaufenden, in Umfangsrichtung geschlossenen Taschen im Rotor 1 angeordnet. Der Rotor 1 ist durch einen Luftspalt 17 vom Stator 12 getrennt.
Der erfindungsgemäße Gedanke beschränkt sich nicht auf einen Innenläufermotor, sondern ist auch auf einen Außenläufermotor anwendbar.

FIG 2 stellt ein nicht beanspruchtes Beispiel dar und zeigt einen Pol 2 des Rotors 1, wobei der Pol 2, in Umfangsrichtung betrachtet einen vorgegebenen Bereich abdeckt und somit der Bereich zwischen dem Ende 3 des magnetischen Pols und der geometrischen Polgrenze einen Teil einer Pollücke bildet. Es liegt also eine vorgegebene Polbedeckung des Rotors 1 vor, die in dem Bereich von 80 bis 100% liegen kann.
Die folgenden Erläuterungen betreffen den prinzipiellen Aufbau eines Pols u.a. dieser und weiterer Ausführungsformen.

Die Permanentmagnete eines Pols sind von ihrer Polarität so ausgerichtet, dass entweder ein Nord- oder Südpol gebildet wird, der in Richtung des Stators 12, bzw. Luftspalt weist. In Umfangrichtung des Rotors 1, also um die Welle 8 betrachtet, wechseln sich somit Nord- und Südpole ab. Ein Pol mit der Polarität "Nordpol" ist links und rechts von einem Pol mit der Polarität "Südpol" umgeben. Jeder Pol 2 weist zum Luftspalt der dynamoelektrischen Maschine einen Nord- oder einen Südpol, der jeweils aus mehreren Permanentmagneten gleicher Polarität gebildet ist. Ein mit seinem Nordpol zum Luftspalt weisender Pol 2, weist dementsprechend mit seinem Südpol bzw. mit dem jeweiligen Südpol der Permanentmagnete dieses Pols zum Blechpaket des Rotors 1.

Radial innerhalb des Pols 2, zwischen Permanentmagneten 4 und Welle 8 ist der Rotor 1 bzw. die Bleche des Rotors 1 mit einer Ausbuchtung 7 versehen, die die Trägheit und das Gewicht des Rotors 1 reduziert.

Die folgenden Ausführungen eigenen sich für zwei und mehrpolige Rotoren 1. Ebenso sind die Permanentmagnete 4 in ihrem axialen Verlauf über den Rotor 1 auch gestaffelt und/oder geschrägt anordenbar, so dass ein magnetischer Pol 2 axial betrachtet geschrägt oder gestaffelt verläuft.

Ausgehend von der Mitte 9 des Pols 2, die einen Permanentmagneten 4 mit einer vorgegebenen Breite 6, einer radialen Höhe 5 und Magnetmaterial mit vorgegebenen Eigenschaften aufweist, schließen sich in Richtung Ende 3 weitere Permanentmagnete 4 an, die zwar die gleiche Breite 6, aber je nach Abstand zur Polmitte 9 unterschiedliche radiale Höhe 5 und unterschiedliches Magnetmaterial aufweisen.

Damit ist auch der mechanische Luftspalt in der Polmitte 9 geringer als an den Enden 3 oder gar der Pollücke.

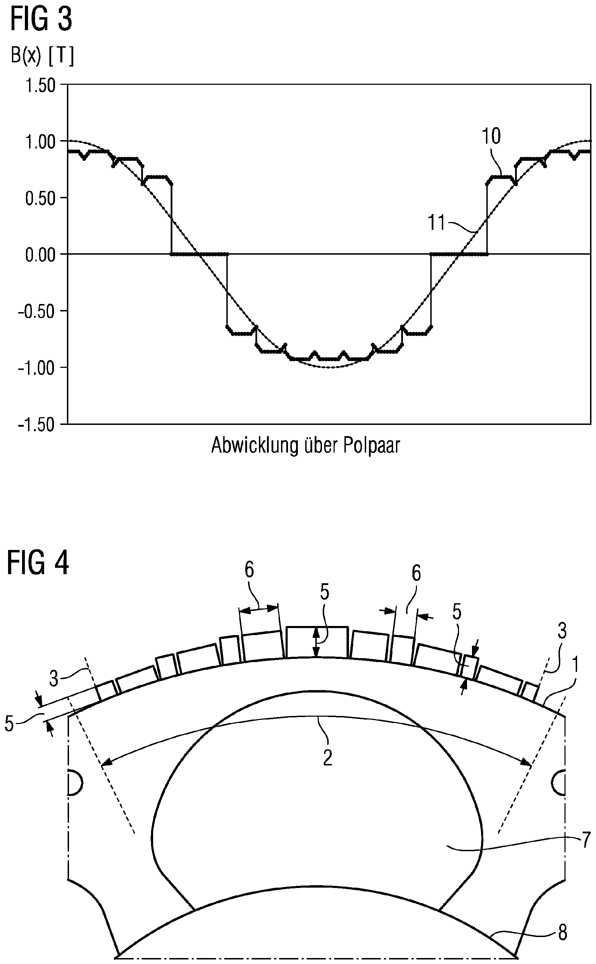

D.h. Permanentmagnete 4 mit gleichem Abstand zur Polmitte 9 weisen in dieser Ausführungsform die gleichen geometrischen Abmessungen und das gleiche magnetische Material auf. Somit weist der in der Polmitte befindliche Permanentmagnet 4 eine hohe Remanenz bei einer niedrigeren Koerzitivfeldstärke auf. Diese Werte ändern sich in Richtung Ende 3 dahingehend, dass bei gleichbleibender Magnetbreite 6 die radiale Höhe 5 abnimmt, wobei zusätzlich, ausgehend von einer vergleichsweise hohen Remanenz in der Polmitte 9 diese sich zu den Enden 3 reduziert. Dieser Abfall der Remanenz erfolgt stufenweise, indem jeder Permanentmagnet in Richtung Ende 3 im Vergleich zum vorhergehenden eine geringere Remanenz aufweist. Damit verbunden nimmt die Koerzitivfeldstärke ausgehend von einer vergleichsweise niederen Wert in der Polmitte 9 in Richtung der Enden 3 zu. Dieser Verlauf ist insbesondere ebenfalls stufenförmig.
Dies führt, wie FIG 3 näher zeigt, zu dem skizzierten Verlauf des Luftspaltfeldes über einen Pol. Das Luftspaltfeld der benachbarten Pole ist aufgrund der zeichnerischen Darstellung jeweils nur als Halbpole dargestellt. Es stellt sich ein nahezu sinusförmiger Verlauf des Luftspaltfeldes ein, der sich einem angestrebten sinusförmigen Verlauf der Grundwelle 11 annähert.

In der erfindungsgemäßen Ausführungsform gemäß FIG 4 wird durch zusätzliche Gestaltung der Permanentmagnete 4 mittels unterschiedlicher Breiten 6, bei in Richtung der Enden 3 reduzierter radialer Höhe 5 und gleichzeitiger Veränderung der magnetischen Eigenschaften das Grundwellenfeld dem sinusförmigen Luftspalt noch weiter angenähert.
D.h. ausgehend von der Polmitte 9 eines Pols 2, die mit einem Permanentmagneten 4 mit einer vorgegebenen radialen Höhe 5, Breite und magnetischen Eigenschaften (hohe Remanenzinduktion, geringe Koerzitivfeldstärke) versehen ist, schließen sich in Richtung Ende 3 folgende Permanentmagnete 4 an. Es folgt jeweils ein Paar Permanentmagnete auf einer ersten Stufe, die eine geringere radiale Höhe 5, als der in der Pomitte 9 positionierte Permanentmagnet 4 aufweist. Des Weiteren befinden sich auf dieser Stufe jeweils zwei Magnete gleicher radialer Höhe 5, aber unterschiedlicher Breite 6. Zwei benachbarte Permanentmagnete 4 einer Stufe weisen eine geringere Remanenzinduktion und höhere Koerzitivfeldstärke als der in der Polmitte 9 angeordnete Permanentmagnet auf.
In einer zweiten Stufe sind ebenfalls links und rechts von der Polmitte 9 Permanentmagnete gleicher Materialeigenschaften und gleicher radialer Höhe 5, aber unterschiedlicher Breite 6 vorgesehen. Die in dieser Stufe befindlichen Permanentmagnete weisen gegenüber denen der ersten Stufe eine geringere Remanenzinduktion und höhere Koerzitivfeldstärke auf. Diese Eigenschaften setzen sich in jeder weiteren Stufe in Richtung Ende 3 fort.

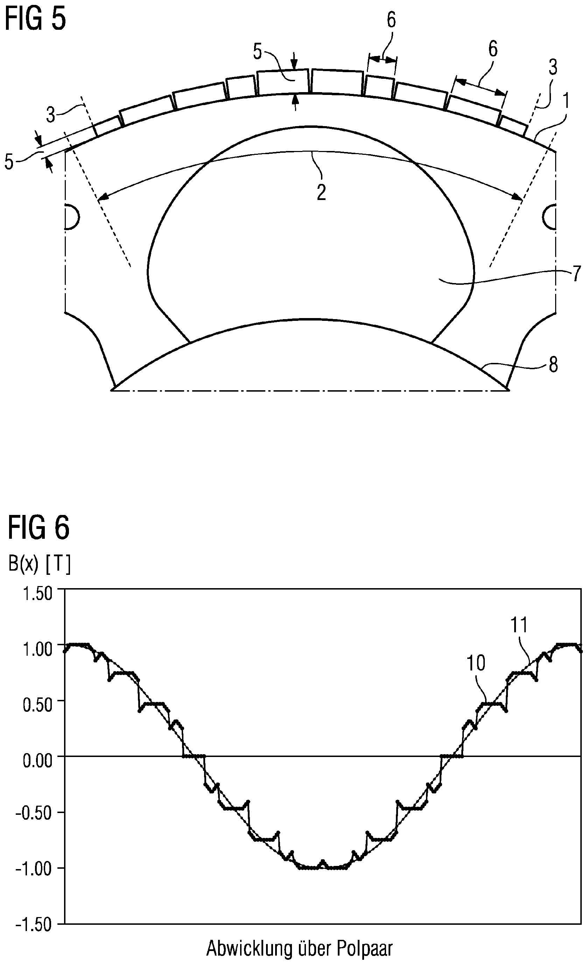

FIG 5 zeigt in einer nicht beanspruchten Ausführungsform eines Pols 2 folgende Anordnung von Permanentmagneten 4. Die Polmitte 9 wird, wie auch das Luftspaltfeld gemäß FIG 6 des gesamten Pols unter Nulllinie zeigt von zwei identischen Permanentmagneten 4 gebildet. D.h. diese Permanentmagnete 4 sind bezüglich ihrer radialen Höhe 5 und Breite 6 als auch in ihren Materialeigenschaften bzgl. Remanenzinduktion und Koerzitivfeldstärke identisch. Daran schließen sich, in Richtung Enden 3 jeweils Permanentmagnete 4 mit im Vergleich zur in der Polmitte befindlichen Permanentmagneten geringerer radialer Höhe 5 und geringerer Breite 6 an. Ebenso weisen diese beiden Permanentmagneten gegenüber denen der Polmitte 9 eine geringere Remanenzinduktion und höhere Koerzitivfeldstärke auf.
In Richtung Enden 3 schließen sich Permanentmagnete 4 an, die in dieser Stufe eine ähnliche Breite 9, wie die Permanentmagnete der Polmitte 9 aufweisen. Jedoch ist die radiale Höhe 5 gegenüber der vorigen Stufe erneut reduziert. Ebenso weisen die Permanentmagnete dieser Stufe gegenüber denen der vorigen Stufe eine geringere Remanenzinduktion und höhere Koerzitivfeldstärke auf.

Die nächste Stufe weist wieder Permanentmagnete geringerer Breite 6 und geringerer radialer Höhe 5 gegenüber der vorigen Stufe auf. Ebenso weisen diese Permanentmagnete gegenüber den Permanentmagneten der vorigen Stufe eine geringere Remanenzinduktion und höhere Koerzitivfeldstärke auf.

Die erfindungsgemäße Lehre beinhaltet somit, dass nicht nur über Variation der geometrischen Abmessungen der einzelnen Permanentmagnete 4 eines Pols 2, wie radiale Höhe 5 und Breite 6 das Luftspaltfeld einem sinusförmigen verlauf angenähert wird, sondern vielmehr auch durch Veränderung der magnetischen Eigenschaften, also der Remanenzinduktion und der Koerzitivfeldstärke.

Ausgehend von der Polmitte 9 eines Pols 2 reduziert sich in Richtung Ende 3, die radiale Höhe 5 und/oder Breite 9 der peramentmagnete 4. Des Weiteren weisen die Permanentmagnete 4 in Richtung Ende 3 einen stufenweise abfallenden Wert der Remanenzinduktion und einen stufenweise ansteigenden Wert der Koerzitivfeldstärke auf.

Durch eine Vielzahl von Permanentmagneten 4, die bei der Bildung eines Pols 2, insbesondere in Umfangrichtung beteiligt sind, kann ein sinusförmiger Verlauf des Luftspaltfeldes noch besser eingestellt werden, da sich dann ein nahezu stetiger Verlauf von radialer Höhe 5 und/oder Breite 6 als auch Remanenzinduktion und Koerzitivfeldstärke einstellen lässt.

Durch die erfindungsgemäße permanenterregte Synchronmaschine reduzieren sich die Verluste, bei gleichzeitiger Erhöhung des Wirkungsgrades, was besonders bei autarken Antriebssystemen, wie z.B. Elektroautos äußerst wünschenswert ist. Damit sind Antriebsbatterien energetisch besser ausgenutzt.

Durch die erfindungsgemäße permanenterregte Synchronmaschine reduzieren sich ebenfalls die Pendelmomente der Maschine, was zu einer geringeren Drehmomentenwelligkeit und geringeren Schwingungsanregung an der Welle 8 führt. Dies ist insbesondere für Werkzeugmaschine vorteilhaft, da sich dann die Güte der zu bearbeiteten Werkstücke verbessert.

Durch den materialoptimierten Aufbau der Pole 2, wird Magnetmaterial von bis zu 20% gegenüber herkömmlichen permanenterregten Synchronmaschinen eingespart.

## Patentansprüche

1. Permanenterregte Synchronmaschine, mit einem Stator (12), der ein Wicklungssystem aufweist, einem zwischen dem Stator (12) und einem Rotor (1) bestehendem Luftspalt (17) wobei der Rotor (1) Permanentmagnete (4) aufweist, die eine gerade Anzahl von Polen (2) bildet, wobei in Umfangsrichtung betrachtet jeder Pol (2) zumindest drei Permanentmagnete (4) aufweist, wobei die radiale Höhe (5) der Permanentmagnete (4) ausgehend von der Mitte (9) eines Pols (2) zu den Enden (3) des jeweiligen Pols (2) in Umfangsrichtung betrachtet abnimmt **gekennzeichnet dadurch, dass** das Wicklungssystem in Nuten eines Blechpakets des Stators angeordnet ist, wobei die Nuten zu dem Luftspalt (17) weisen, die Remanenz der Permanentmagnete ausgehend von der Mitte eines Pols zu den Enden des jeweiligen Pols in Umfangsrichtung betrachtet abnimmt,
die Koerzitivfeldstärke der Permanentmagnete (4) ausgehend von der Mitte (9) des Pols (2) zu den Enden (3) des Pols (2) zunimmt, und sich ausgehend von der Polmitte (9) des jeweiligen Pols (2), welche mit einem der Permanentmagneten (4) mit einer vorgegebenen radialen Höhe (5), Breite (6) und magnetischen Eigenschaften versehen ist, in Richtung zum jeweiligen Ende (3) eine jeweilige erste Stufe befindet, welche jeweils ein Paar der Permanentmagnete (4) aufweist, die eine geringere radiale Höhe (5) als der in der Polmitte (9) positionierte Permanentmagnet (4) aufweisen und die jeweilige erste Stufe des Weiteren jeweils zwei Permanentmagnete (4) gleicher radialer Höhe (5), aber unterschiedlicher Breite (6) aufweist, wobei sich ausgehend von der jeweiligen ersten Stufe in Richtung zum jeweiligen Ende (3) zumindest eine jeweilige zweite Stufe befindet, welche Permanentmagnete (4) gleicher Materialeigenschaften und gleicher radialer Höhe (5), aber unterschiedlicher Breite (6) aufweist.

2. Permanenterregte Synchronmaschine nach Anspruch 1, **dadurch gekennzeichnet, dass** jeder Pol (2) in Umfangsrichtung betrachtet schmale und breite Permanentmagnete (4) aufweist, derart, dass sich an den Enden (3) des Pols (2) schmale Permanentmagnete (4) befinden.

3. Permanenterregte Synchronmaschine nach Anspruch 2, **dadurch gekennzeichnet, dass** jeder Pol (2) in Umfangsrichtung betrachtet abwechselnd schmale und breite Permanentmagnete (4) aufweist, derart, dass sich an den Enden (3) des Pols (2) schmale Permanentmagnete (4) befinden.

4. Permanenterregte Synchronmaschine nach einem der vorhergehenden Ansprüche, **dadurch gekennzeichnet, dass** die Permanentmagnete (4) an der Oberfläche des Blechpakets des Rotors (3) angeordnet sind.

5. Permanenterregte Synchronmaschine nach einem der Ansprüche 1 oder 2, **dadurch gekennzeichnet, dass** sich die Permanentmagnete (4) in Ausnehmungen eines Blechpakets des Rotors (3) befinden.

6. Permanenterregte Synchronmaschine nach einem der vorhergehenden Ansprüche, wobei diese Synchronmaschine in einem elektrisch angetriebenen Fahrzeug oder einer Werkzeugmaschine eingesetzt ist.

## Claims

1. Permanently excited synchronous machine, with a stator (12), which has a winding system, an air gap (17) existing between the stator (12) and a rotor (1), wherein the rotor (1) has permanent magnets (4), which forms an even number of poles (2), wherein when viewed in the circumferential direction each pole (2) has at least three permanent magnets (4), wherein the radial height (5) of the permanent magnets (4) decreases starting from the centre (9) of a pole (2) to the ends (3) of the respective pole (2) when viewed in the circumferential direction, **characterised in that** the winding system is arranged in grooves of a laminated core of the stator, wherein the grooves lead towards the air gap (17), the remanence of the permanent magnets decreases starting from the centre of a pole to the ends of the respective pole when viewed in the circumferential direction, the coercivity of the permanent magnets (4) decreases starting from the centre (9) of the pole (2) to the ends (3) of the pole (2), and starting from the pole centre (9) of the respective pole (2), which is provided with one of the permanent magnets (4) with a predefined radial height (5), width (6) and magnetic properties, a first respective step is located in the direction towards the respective end (3) and in each case has a pair of the permanent magnets (4), which have a lower radial height (5) than the permanent magnet (4) positioned in the pole centre (9) and the respective first step furthermore in each case has two permanent magnets (4) of the same radial height (5), but different widths (6), wherein starting from the respective first step at least one respective second step is located in the direction towards the respective end (3) and has permanent magnets (4) with the same material properties and the same radial height (5), but different widths (6).

2. Permanently excited synchronous machine according to claim 1, **characterised in that** each pole (2) when viewed in the circumferential direction has narrow and wide permanent magnets (4) in such a manner that narrow permanent magnets (4) are located on the ends (3) of the pole (2).

3. Permanently excited synchronous machine according to claim 2, **characterised in that** each pole (2) when viewed in the circumferential direction has alternatingly narrow and wide permanent magnets (4) in such a manner that narrow permanent magnets (4) are located on the ends (3) of the pole (2).

4. Permanently excited synchronous machine according to one of the preceding claims, **characterised in that** the permanent magnets (4) are arranged on the surface of the laminated core of the rotor (3).

5. Permanently excited synchronous machine according to one of claims 1 or 2, **characterised in that** the permanent magnets (4) are located in recesses of a laminated core of the rotor (3) .

6. Permanently excited synchronous machine according to one of the preceding claims, wherein said synchronous machine is implemented in an electrically driven vehicle or a machine tool.

## Revendications

1. Machine synchrone excitée en permanence, comprenant un stator (12), qui a un système d'enroulement, un entrefer (17) constitué entre le stator (12) et un rotor (1), le rotor (1) ayant des aimants (4) permanents, qui forment un nombre pair de pôles (2), dans lequel, considéré dans la direction périphérique, chaque pôle (2) a au moins trois aimants (4) permanents, la hauteur (5) radiale des aimants (4) permanents, à partir du milieu (9) d'un pôle (2) jusqu'aux extrémités (3) de ce pôle, diminuant, considéré dans la direction périphérique, **caractérisée en ce que** le système d'enroulement est disposé dans des encoches d'un paquet de tôles du stator, les encoches étant tournées vers l'entrefer (17), la rémanence des aimants permanents , à partir du milieu d'un pôle jusqu'aux extrémités de ce pôle, diminuant, considéré dans la direction périphérique, l'intensité du champ coercitif des aimants (4) permanents augmentant à partir du milieu (9) du pôle (2) jusqu'aux extrémités (3) du pôle (2) et
à partir du milieu (9) du pôle (2), qui est pourvue de l'un des aimants (4) permanents ayant une hauteur (5) radiale donnée à l'avance, une largeur (6) et des propriétés magnétiques, se trouve dans la direction de l'extrémité un premier palier, qui a respectivement une paire des aimants (4) permanents, lesquels ont une hauteur (5) radiale plus petite que l'aimant (4) permanent placé au milieu (9) du pôle et le premier palier a en outre deux aimants (4) permanents de même hauteur (5) radiale mais de largeur (6) différente, dans lequel, à partir du premier palier, en allant dans la direction de l'extrémité (3), se trouve au moins un deuxième palier, qui a des aimants (4) permanents ayant les mêmes propriétés de matériau et la même hauteur (5) radiale mais des largeurs (6) différente.

2. Machine synchrone excitée en permanence suivant la revendication 1, **caractérisée en ce que** chaque pôle (2) a, considéré dans la direction périphérique, des aimants (4) permanents étroits et larges, de manière à ce que des aimants (4) permanents étroits se trouvent aux extrémités (3) des pôles (2).

3. Machine synchrone excitée en permanence suivant la revendication 2, **caractérisée en ce que** chaque pôle (2) a, considéré dans la direction périphérique, des aimants (4) permanents, en alternance, étroits et larges, de manière à ce que des aimants (4) permanents étroits se trouvent aux extrémités (3) du pôle (2).

4. Machine synchrone excitée en permanence suivant l'une des revendications précédentes, **caractérisée en ce que** les aimants (4) permanents sont disposés à la surface du paquet de tôles du rotor (3).

5. Machine synchrone excitée en permanence suivant l'une des revendications 1 ou 2, **caractérisée en ce que** les aimants (4) permanents se trouvent dans des évidements d'un paquet de tôles du rotor (3).

6. Machine synchrone excitée en permanence suivant l'une des revendications précédentes, dans laquelle cette machine synchrone est utilisée dans un véhicule électrique ou dans une machine-outil.
